Europäisches Patentamt

European Patent Office

Office européen des brevets

(19)

(11) Veröffentlichungsnummer: **0 173 229 B1**

# (12) EUROPÄISCHE PATENTSCHRIFT

(45) Veröffentlichungstag der Patentschrift: **09.10.91**

(21) Anmeldenummer: **85110440.6**

(22) Anmeldetag: **20.08.85**

Die Akte enthält technische Angaben, die nach
dem Eingang der Anmeldung eingereicht wurden
und die nicht in dieser Patentschrift enthalten sind.

(51) Int. Cl.⁵: **A01N 25/00**, A01N 37/10,
C11D 3/48

(54) **Mittel zur Abtötung von Hausstaubmilben und dessen Verwendung.**

(30) Priorität: **20.08.84 DE 3430611**

(43) Veröffentlichungstag der Anmeldung:
**05.03.86 Patentblatt 86/10**

(45) Bekanntmachung des Hinweises auf die
Patenterteilung:
**09.10.91 Patentblatt 91/41**

(84) Benannte Vertragsstaaten:
**AT BE CH DE FR GB IT LI LU NL SE**

(56) Entgegenhaltungen:
**EP-A- 0 017 315
EP-A- 0 031 455
FR-A- 2 443 501
GB-A- 1 368 657
US-A- 3 630 919**

**CHEMICAL ABSTRACTS, Band 101, Nr. 14,
Oktober 1984, Seite 100, Zusammenfassung
Nr. 112809f, Columbus, Ohio, US; & ZA-A-83
02 947 (IMMUNOCHEM RESEARCH (Pty.) LTD)
28-03-1984**

(73) Patentinhaber: **Werner & Mertz GmbH
Ingelheimstrasse 1-3
W-6500 Mainz 1(DE)**

(72) Erfinder: **Bischoff, Edelbert, Dr.
Leibnizstrasse 52
W-6719 Kirchheim-Bolanden(DE)**
Erfinder: **Wetter, Gert, Dipl.-Chem.
Im alten Rathaus
Wörrstadt-Rommersheim(DE)**

(74) Vertreter: **Zumstein, Fritz, Dr. et al
Dr. F. Zumstein sen Dr. E. Assman Dipl.-Ing.
F. Klingseisen Dr. F. Zumstein jun. Bräuhausstrasse 4
W-8000 München 2(DE)**

## Beschreibung

In letzter Zeit nehmen Gesundheitsstörungen durch Allergien zu. Eine besonders große Rolle spielt dabei die Hausstauballergie. Ursache dafür sind die Exkremente der Hausstaubmilbe, die Allergene enthalten und Feinststaub-Aerosole bilden. Das Auftreten der Hausstaubmilben wird in den Industriestaaten immer häufiger beobachtet. Mögliche Ursache hierfür sind das Kleinklima in Wohnräumen und die Verminderung natürlicher Feinde der Hausstaubmilben durch Hygienemaßnahmen, wie z.B. Staubsaugen. Hausstaubmilben leben dort, wo sie sich verstecken können und wo sie geeignete Nahrung und das ihnen adäquate Kleinklima hinsichtlich Luftfeuchtigkeit und Wärme vorfinden. Daraus ergibt sich, daß Textilmaterialien ihre bevorzugten Aufenthaltsorte darstellen, d.h. also Betten, Polstermöbel,Teppiche u. dgl.

Zufriedenstellende Mittel zur Bekämpfung der Hausstaubmilben gibt es bisher nicht. Die bekannten Mittel sind aufgrund ihrer Zusammensetzung nur für die Behandlung kleiner Flächen, wie z.B. der Matratzen von Betten, geeignet. Angewandt werden sie durch Besprühen der Oberfläche. Eine nähere Untersuchung zeigt jedoch, daß die Behandlung von Betten - selbst wenn sie dort wirken sollte - nur einen Teil des Problems lösen kann. Stark befallen sind vielfach Polstermöbel, die in der Regel weniger oft und intensiv gereinigt werden als Betten. Ferner wird aus Teppichen durch Begehen fortlaufend Feinststaub aufgewirbelt; das bedeutet, daß Allergiker Tag und Nacht belästigt werden.

Die Tendenz der Hausstaubmilbe, sich zu verstecken und zu verkriechen, führt dazu, daß eine Behandlung der Oberflächen der genannten Innenausstattungen nicht ausreichend ist. Ein Teppich muß bis in die Tiefe behandelt werden, Matratzen und Polstermöbel in einer Schicht von 1 bis 2 cm Dicke, in der sich die Milben größtenteils aufhalten.

Andererseits wird von einem Präparat (Mittel), das geeignet sein soll, Hausstaubmilben abzutöten, - da es in der Umgebung von Menschen angewandt wird - physiologische Verträglichkeit und toxikologische Unbedenklichkeit gefordert.

Bisheriger Stand der Technik

Zur Bekämpfung von Hausstaubmilben in Betten sind zwei im Handel befindliche Präparate bekannt, die Wirkstoffe auf organischer Lösungsmittelbasis enthalten und durch Besprühen der Matratzen angewandt werden. Die eigentlichen Wirkstoffe bestehen in einem Falle aus Phenolderivaten und einer Reihe natürlicher ätherischer Öle, im anderen aus dem Antibiotikum Natamycin (vgl. A. Pénaud et al: Methods of destroying house dust pyroglyphid mites, Clinical Allergy (1975), Seite 109 bis 114; A. Pénaud et al: Results of a controlled trial of the acaricide Paragerm on Dermatophagoides spp. in dwelling houses, Clinical Allergy (1977), Seite 49 bis 53; Danièle de Saint-Georges-Gridelet: Mise au point d'une stratégie de contrôle de l'acarien des poussières (Dermatophagoides pteronyssinus) par utilisation d'un fongicide, Acta Oecologica/Oecol. Applic. (1981), Seite 117 bis 126).

Der Anwendungsbereich beider Mittel ist insofern begrenzt, als organische Lösungsmittel aus Sicherheitsgründen nicht großflächig angewandt werden können und weil Phenolderivate und ätherische Öle aus physiologischen und zum Teil geruchlichen Gründen nicht zufriedenstellend sind. Außerdem richtet sich die Anwendung eines Antibiotikums, wie Natamycin, im Grunde nicht gegen die Hausstaubmilben selbst, sondern gegen Pilze, die die den Milben als Nahrung dienenden Hautschuppen besiedeln und diese Nahrung für die Milben aufbereiten. Eine befriedigende Abtötung der Milben wird damit - wie Versuche zeigen - nicht erreicht.

Ferner wurden in der Literatur als Milben abtötende Wirkstoffe Gammahexachlorcyclohexan, Pirimiphos-Methyl, Diethyl-m-Toluamid, Dibutylphthalat und Benzylbenzoat beschrieben (vgl. Agnes-Heller-Haupte et al, Tests of acaricides against house dust mites, J. Med. Entomology, Vol. 11, Nr. 5, 551 bis 558 (1974). Unter diesen Substanzen sind die beiden erstgenannten zwar an sich wirksam, sie scheiden jedoch aus toxikologischen und umwelthygienischen Gründen für den Einsatz im Haushalt aus. Auch die verbleibenden drei Wirkstoffe ließen sich nicht in Produkte für den praktischen Gebrauch überführen.

Aus dem europäischen Patent 17 315 ist bekannt, daß normale Insektizide, wie Pyrethrine oder DDT, gegen Hausstaubmilben relativ unwirksam sind. Benzylbenzoat wird gemäß dieser Patentschrift als geeigneter Wirkstoff angesehen und es wird dort angestrebt, einen Nachteil dieser Verbindung, nämlich den relativ hohen Dampfdruck, herabzusetzen, um eine längere Verweildauer der Substanz zu erreichen. Zu diesem Zweck werden dort Kombinationen von Benzylbenzoat mit Fettsäureestern und einem pilzbekämpfenden Mittel in einem nicht wäßrigen Präparat vorgeschlagen.

Eine ähnliche Aufgabe soll nach dem britischen Patent 1 368 657 dadurch gelöst werden können, daß man dem Benzylbenzoat nichtflüchtige Polyalkylenglykole oder dessen nichtflüchtige Äther oder Ester zufügt. Dies hat jedoch zu erheblichen Nachteilen beim Benutzen der Betten geführt, die in dem genannten europäischen Patent 17 315 im einzelnen dokumentiert sind. Als Trägersubstanzen dienen in beiden Literaturstellen flüchtige organische Lösemittel.

Der Hauptanwendungsbereich des Mittels gemäß europäischem Patent 17 315 dient der prophylaktischen Behandlung von industriellen Materialien, die zur Herstellung von Matratzen u. dgl. dienen. Es soll also dem Milbenbefall vorgebeut werden. Aus diesem Grund ist auch die Erniedrigung des Dampfdruckes von Benzylbenzoat dort von großer Bedeutung. Ebenso ist dort, d.h. im Fabrik-Bereich, die Verwendung solcher organischer Lösemittel möglich, die physiologisch unzuträglich sind, wie z.B. Chloroform oder Tetrachlorkohlenstoff. In diesem Patent wird auch angedeutet, daß es für den Fall der Textilausrüstung nützlich sein könnte, Gemische aus Benzylbenzoat und dampfdruckerniedrigenden Zusätzen in fester Form anzuwenden, z.B. dispergiert mit einem geeigneten Pulver, wie Talk oder Aerosil. Dieser Vorschlag wird jedoch nicht weiter erläutert und gibt keine technische Lehre für den Anmeldungsgegenstand.

Zusammenfassend ergab sich angesichts des Stands der Technik für den Anmeldungsgegenstand folgende Ausgangssituation:

Normale bekannte Insektizide sind gegen Hausstaubmilben nicht wirksam und/oder toxikologisch bedenklich bzw. geruchlich so aufdringlich, daß sie im häuslichen Bereich nicht benützt werden können. Unter den sonstigen als akarizid wirksam angesehenen Substanzen böten sich aus physiologischen Gründen zwar bestimmte Ester an, wie z.B. Benzylbenzoat, Phthalsäuredibutylester u.ä.

Man hat deswegen auch schon versucht,

z.B. bei Benzylbenzoat,einige der dieser Verbindung - bezogen auf die vorgesehene Art der Anwendung - anhaftenden Nachteile durch spezielle Rezeptformulierungen zu überwinden. Dazu gehört der relativ hohe Dampfdruck, der vor allem dann stört, wenn man die Verbindung prophylaktisch zur Ausrüstung von Textilien, d.h. über längere Zeit,einwirken lassen möchte (vgl. EP-PS 17 315). Eine Textilausrüstung dieser Art konnte jedoch in der Praxis nicht verwirklicht werden. Außerdem blieb auch das Problem ungelöst, daß in den meisten Haushalten Hausstaubmilben bereits auftreten, und daß diese die Teppiche, Polstermöbel und Betten bereits befallen haben. Die bisher bekannten Handelsprodukte sind - wie oben ausgeführt wurde - lediglich zur Behandlung von Betten bestimmt und können wegen ihres organischen Lösungsmittelgehaltes auch nur auf kleineren begrenzten Flächen angewandt werden.

Eine der erfindungsgemäß zu lösenden Probleme war deshalb, akarizide Mittel zu finden, die im gesamten Haushalt - womöglich ohne erheblichen zusätzlichen Arbeitsaufwand, d.h. im Rahmen des normalen Reinigungsprozesses - von Laien angewandt werden können.

Der Lebenszyklus der Hausstaubmilben erstreckt sich über einen Zeitraum von ca. drei Monaten. Rechnet man das Schlüpfen nicht abgetöteter Eier hinzu, so ist ein Einwirkungszeitraum des Akarizids von zwei bis drei Wochen erforderlich, um eine Milbenpopulation zu zerstören bzw. so weit zu erniedrigen, daß keine Belästigungen der Bewohner der milbenfallenen Räume und Gegenstände mehr eintritt. Eine weiteres erfindungsgemäß zu lösendes Problem war deshalb, ein Hausstaubmilben tötendes Mittel zu finden, dessen Komponenten hinsichtlich physiologischer Verträglichkeit für den Menschen auch bei mehrmaliger Anwendung unbedenklich sind.

Bei der Auswahl der akariziden Wirkstoffe hätte man zwar an das physiologisch gut untersuchte Benzylbenzoat denken können. Versuche mit dieser Verbindung zur Anwendung in bisher üblichen Reinigungsmitteln ergaben jedoch erhebliche Probleme: Die hochsiedende Flüssigkeit "klebte" an allen mit ihr in Verbindung kommenden Unterlagen, z.B. Teppichfasern, Matratzengeweben, Polsterbespannungen, und führte dort zu einer extrem verstärkten Tendenz zur Schmutzaufnahme. Der Reinigungsvorgang wurde durch Mitverwendung dieser Substanz in sein Gegenteil verkehrt, da eine überproportional verstärkte Wiederanschmutzung unmittelbar nach Anwendung der betreffenden Mittel begann. Phthalsäuredibutylester weist diesbezüglich ähnliche Nachteile auf. Ein drittes erfindungsgemäß zu lösendes Problem war deshalb die Schaffung eines Mittels ohne Verklebungstendenz.

Ein weiteres Problem der Mitverwendung von Benzylbenzoat und Dibutylphthalat ergab sich daraus, daß übliche flüssige Reinigungsmittel, deren Reinigungswirkung im wesentlichen auf die in ihnen vorhandenen Tenside zurückzuführen ist, ihre ursprüngliche Reinigungswirkung verlieren. (Dies könnte damit zusammenhängen, daß ein Großteil der Tenside zum Emulgieren des Benzylbenzoates bzw. Dibutylphthalat verbraucht wird und nicht mehr zur Schmutzemulgierung zur Verfügung steht.) Um diesen Nachteil zu beheben, hat die Anmelderin versucht, den Anteil an Tensiden zu erhöhen. Dies führte jedoch zu erneuten Nachteilen, da das Wiederanschmutzungsverhalten noch ungünstiger wurde.

Die Anmelderin stellte nun fest, daß dieser erste Problemkreis gelöst werden kann, wenn man anspruchsgemäß ein Reinigungsmittel mit akariziden Wirkstoffen, z.B. Benzylbenzoat, so ausgestaltet, daß sich aus der Kombination Reinigungsmittel/Wirkstoff nach dem Aufbringen pulverförmige Trockenrückstände ergeben, die die Tendenz zur verstärkten Wiederanschmutzung nicht mehr zeigen.

Außer dem erörterten formulierungstechnischen Aspekt des Anmeldungsgegenstands waren aber noch weitere Erfordernisse, insbesondere hinsichtlich der akariziden Wirkung, z.B. des Benzylbenzoats und des Phthalsäuredibutylesters, zu erfüllen. In diesem Zusammenhang ist folgendes festzustellen: Da eine Abtötung der Milben durch Einwirkung nur des Dampfes von Benzylbenzoat nicht möglich ist (vgl. die obengenannte Literatur), mußte nach anderen Möglichkeiten der Wirkstoffanwendung gesucht werden. Zwar können Milben durch Immersion in eine wirkstoffhaltige Lösung abgetötet werden; dabei scheiden jedoch toxische flüssige Trägermaterialien, wie z.B. organische Lösemittel, aus. Andererseits ist eine Behandlung durch Immersion in wäßrige Flüssigkeiten nur dann erfolgreich, wenn die Milben durch die Flüssigkeit auch erreicht werden; dazu soll die Flüssigkeit an jeder Stelle des zu behandelnden Gegenstands anwesend sein, und sie soll ferner die Milben und ihre Umgebung vollständig benetzen. Die Erreichung auch dieses Ziels bei der Schaffung eines neuen Mittels zur Abtötung von Hausstaubmilben war deshalb eine weitere Problemstellung.

Die Milben können, wie die Anmelderin festgestellt hat, durch orale Aufnahme des akariziden Wirkstoffs abgetötet werden. Da sie innerhalb ihres Lebensraumes wandern, gelangen sie auch an vorhandene feste Wirkstoffanteile, die sie bei der Behandlung selbst nicht direkt erreicht haben. In diesem Zusammenhang war es ein weiteres zu lösendes Problem, ein

Mittel zur Abtötung von Hausstaubmilben zu schaffen, dessen nach dem Aufbringen resultierender pulverförmiger Rückstand, wie Futter von den Milben angenommen wird, ohne daß er auf sie in irgendeiner Form abweisend wirkt.

## Gegenstand der Erfindung

Sämtliche vorstehend erörterten Probleme sowohl hinsichtlich der Formulierungstechnik, als auch hinsichtlich der Heranführung des akariziden Wirkstoffs an die Milben, werden nun durch den Gegenstand der vorliegenden Anmeldung gelöst, nämlich durch ein Mittel zur Abtötung von Hausstaubmilben, das dadurch gekennzeichnet ist, daß es aus einer Kombination von

- Benzylbenzoat oder Phthalsäuredibutylester als akarizidem Wirkstoff, und
- einem flüssigen, schaumförmigen oder pulverförmigen Reinigungsmittel für textile Innenausstattungsflächen

mit Wasser als überwiegender Trägerflüssigkeit besteht, wobei dieses Mittel auf der Basis wäßriger Kunststoffdispersionen oder - lösungen oder wasserfeuchter anorganischer oder organischer Feststoffpulver aufgebaut ist, die eine solche Teilchengröße aufweisen, oder diese nach dem Antrocknen bzw. Aufbringen ausbilden, daß der resultierende pulverförmige Rückstand für eine orale Aufnahme durch die Hausstaubmilben geeignet ist, ausgenommen ein organische Feststoffpulver enthaltendes Mittel, dessen Feststoffgehalt unter 0,5 Gewichtsprozent liegt.

Im Unterschied zu der genannten GB 13 68 657 und EP 17 315 ist das erfindungsgemäße Mittel insbesondere frei von Polyalkylenglykolen, deren Äthern und Estern, sowie frei von Fettsäureestern.

Durch ein gemäß Hauptanspruch gekennzeichnetes Mittel und seine weiteren Ausgestaltungen gemäß den folgenden Unteransprüchen, wird unter anderem sichergestellt, daß eine verstärkte Wiederanschmutzung (durch ein "Kleben" der akariziden Wirkstoffe) vermieden wird, und daß der nach dem Antrocknen bzw. Aufbringen resultierende pulverförmige Rückstand nicht nur von seiner Teilchengröße her für die orale Aufnahme durch die Milben geeignet ist, sondern von ihnen auch als Futter angenommen wird.

Beispielsweise werden Milben, wie experimentell nachgewiesen werden konnte, nach dem Fressen von Partikeln eines indifferenten Trägermaterials, das 1 % seines Gewichts an Benzylbenzoat enthält, innerhalb einer Stunde immobilisiert und abgetötet.

Nachstehend wird das erfindungsgemäße Mittel, seine weiteren Ausgestaltungen sowie seine Anwendung im einzelnen erläutert.

Bevorzugt ist die Trägerflüssigkeit im erfindungsgemäßen Hausstaubmilben tötenden Mittel (im Falle eines flüssigen oder schaumförmigen Reinigungsmittels) Wasser oder (im Falle eines pulverförmigen Reinigungsmittels) überwiegend wäßrig, d.h. sie enthält mindestens 50 Gew.-% Wasser.

Als akarizider Wirkstoff (nachstehend Komponente A) werden die hochsiedenden Ester Benzoesäurebenzylester oder Phthalsäuredibutylester verwendet.

Die Menge des im erfindungsgemäßen Mittel vorhandenen akariziden Wirkstoffs kann variieren. Im allgemeinen beträgt sie 1 bis 20 Gewichtsprozent, bezogen auf die erfindungsgemäße Zusammensetzung. Dabei ist ein Mengenbereich von 1 bis 6 Gewichtsprozent bevorzugt. Besonders bewährt hat sich ein Mengenbereich von 2 bis 6 Gewichtsprozent.

Mit dem erfindungsgemäß vorhandenen flüssigen, schaumförmigen oder pulverförmigen Reinigungsmittel für textile Innenausstattungsflächen, mit Wasser als überwiegender Trägerflüssigkeit lassen sich die weiter oben genannten Erfordernisse erfüllen und ergibt sich gleichzeitig nach dem Antrocknen bzw.

4

EP 0 173 229 B1

Aufbringen der gewünschte pulverförmige Rückstand mit der geeigneten Teilchengröße.

Die mittlere Teilchengröße des pulverförmigen Rückstands nach dem Antrocknen bzw. Aufbringen beträgt im allgemeinen 2 bis 100 $\mu$m. Dabei ist besonders ein Größenbereich von 10 bis 50 $\mu$m bevorzugt.

Zwecks Erzielung des gewünschten pulverförmigen Rückstands basiert die erfindungsgemäße Rezeptformulierung besonders auf folgenden Komponenten:

A. akarizider Wirkstoff: 1 bis 20 Gewichtsprozent, insbesondere 1 bis 6 Gewichtsprozent.

B. Wasser:

bei flüssigem Reinigungsmittel 10 bis 90 Gew.-%, insbesondere 40 bis 70 Gew.-%;

bei schaumförmigem Reinigungsmittel 10 bis 90 Gew.-%, bevorzugt 60 bis 90 Gew.-%, insbesondere 70 bis 90 Gew.-%;

bei pulverförmigem Reinigungsmittel 5 bis 60 Gew.-%, insbesondere 10 bis 30 Gew.-%;

C. gelöster bzw. dispergierter Kunststoff:

bei flüssigem Reinigungsmittel 5 bis 90 Gew.-%, insbesondere 20 bis 60 Gew.-%;

bei schaumförmigem Reinigungsmittel 1 bis 80 Gew.-%, insbesondere 5 bis 10 Gew.-%.

Anorganischer oder organischer Feststoff:

bei flüssigem Reinigungsmittel, nur gegebenenfalls,0,5 bis 20 Gew.-%;

bei schaumförmigem Reinigungsmittel 0,5 bis 20 Gew.-%, insbesondere 1 bis 5 Gew.-%;

bei pulverförmigem Reinigungsmittel 20 bis 80 Gew.-%, insbesondere 30 bis 70 Gew.-%.

D. Tenside:

bei flüssigem und schaumförmigem Reinigungsmittel 0,05 bis 10 Gew.-%, insbesondere 2 bis 5 Gew.-%;

bei pulverförmigem Reinigungsmittel 0,05 bis 10 Gew.-%, insbesondere 0,05 bis 1 Gew.-%.

E. Entschäumer:

bei flüssigem Reinigungsmittel 0,2

bis 5 Gew.-%, insbesondere 0,3 bis 1 Gew.-%

und gegebenenfalls F. fakultativen Zusätzen, wie Parfüm (insbesondere 0,2 Gew.-%); Konservierungsmittel (insbesondere 0,2 Gew.-%); Verdickungsmittel (insb. 0,1 bis 2 Gew.-%).

Als Fettschmutz-lösender Bestandteil ist bei einem pulverförmigen Reinigungsmittel bevorzugt noch z.B. Testbenzin in einer Menge von 1 bis 30 Gew.-%, insbesondere 5 bis 20 Gew.-% vorhanden. Als Treibmittel ist bei einem schaumförmigen Reinigungsmittel bevorzugt z.B. Propan, Butan in einer Menge von 5 bis 20 Gew.-%, insbesondere 7 bis 13 Gew.-%, vorhanden.

Für die obengenannte Komponente C sind als Beispiele zu nennen: gelöste organische oder anorganische Polymere, wie Xanthan-Gummi oder Wasserglas; Acrylate aus wäßrigen Acrylatdispersionen; inerte Materialien, wie Silikate, z.B. Montmorillonit,amorphes Siliciumdioxid, $SiO_2$ in Form von Quarzsand oder Kieselerde, oder Carbonate, z.B. gefällte oder gemahlene mineralische Kreide; oberflächenreiche Substanzen, wie Cellulosepulver, gemahlene Kunststoffschäume (z.B. aus Harnstoff-Formaldehyd-Harz), Kunststoffpulver (z.B. aus Polyamid, Polyurethan oder Polyethylen), Mehle aus Holz oder Maiskolben, nicht-quellbare Stärke. Ferner sind noch zu nennen: Natrium-Aluminium-Silikate (Molekularsieb-Typen), Poliertonerde, Aluminiumoxid, Borax; sowie organische makromolekulare Produkte, z.B. Polystyrol-, Polypropylen- und Polyvinylharze. Dabei ist es erfindungsgemäß möglich, daß in der Rezeptformulierung eine oder mehrere dieser Komponenten C vorhanden sind.

Im einzelnen dienen diese Zusätze C dazu, daß nach dem Antrocknen bzw. Aufbringen des erfindungsgemäßen Mittels ein pulverförmiger Rückstand resultiert, in dem der akarizide Wirkstoff in fester Form (inkludiert, absorbiert oder adsorbiert) vorliegt, und zwar in der mittleren Teilchengröße, die von der Hausstaubmilbe aufgenommen werden kann.

Als für die erfindungsgemäße Rezeptformulierung in Frage kommende Tenside (Komponente D) kommen die auf dem Gebiet der textilen Reinigungsmittel üblichen anionaktiven, nicht ionogenen, kationaktiven oder amphoteren Stoffe in Frage. Als anionische Tensid-Beispiele sind zu nennen: sulfonierte aromatische Kohlenwasserstoffe, z.B. n-Alkylbenzolsulfonat; sulfonierte aliphatische Kohlenwasserstoffe, z.B. sekundäres Alkansulfonat; sulfoniertes Alpha-Olefin, z.B. Olefinsulfonat; sulfatierfer Fettalkohol, z.B. Natriumlaurylsulfat; sulfatierter Fettalkoholether, z.B. Natriumlaurylpolyglykolethersulfat; sulfonierte Fettsäuremethylester, z.B. Palmkernsulfofettsäuremethylester; sulfonierte Maleinsäureester, z.B. Laurylsulfosuccinat. Als nicht-ionische Tensid-Beispiele sind zu nennen: Alkylphenolethoxylat, Fettsäurealkylolamid, Fettsäurealkylolamidethoxylat, Fettaminethoxylat. Als kationische Tenside sind quaternäre Ammoniumverbindungen zu nennen. Beispiele für Ampholyte sind Betaine.

Der in der Rezeptformulierung vorhandene Entschäumer (Komponente E) kann ebenfalls üblicher Art sein. Besonders bevorzugtsind dabei Fettsäuren, z.B. im Handel befindliche Gemische von $C_{12}$-$C_{18}$-Fettsäuren in Form ihrer Natriumsalze (Seifen). Bezüglich der entschäumenden Wirkung von Seifen vgl. Helmut Stache, Tensid-Taschenbuch, München-Wien (1979), Seite 201.

5

Je nachdem, ob das erfindungsgemäß vorhandene Reinigungsmittel in Form einer Flüssigkeit oder schaumförmig oder pulverförmig vorliegt, sind für den Einzelfall noch folgende Erläuterungen angebracht:

1. Flüssiges Reinigungsmittel (akarizider Teppichreiniger)

Der akarizide Wirkstoff wird in das wäßrige Medium eingearbeitet. Dadurch erfolgt bei der Immersion der Milben in die Flüssigkeit, d.h. bei dermalem Kontakt, deren Abtötung. Gleichzeitig bewirkt der nach dem Antrocknen der Flüssigkeit resultierende pulverförmige Rückstand mit der entsprechenden mittleren Teilchengröße, daß er von den Milben auch oral aufgenommen wird und auch auf diese Weise wirkt. Dabei werden auch solche Milben erfaßt, die von der Flüssigkeit selbst nicht benetzt wurden bzw. die aus nicht behandelten Bereichen nach dem Antrocknen der Flüssigkeit zuwandern.

2. Schaumförmiges Reinigungsmittel (akarizider Polster- und Matratzenreiniger)

Es gelten hier ähnliche Gesichtspunkte wie vorstehend unter 1 beschrieben, jedoch ist es in diesem Falle nicht beabsichtigt, eine weitgehende Benetzung der zu behandelnden Gegenstände durchzuführen; eine Immersion ist also nur im oberflächlichen Bereich möglich.

Das Mittel wirkt hier hauptsächlich nach dem Antrocknen über den pulverförmigen Rückstand mit der Teilchengröße, die von den Milben oral aufgenommen werden kann. Der pulverförmige Rückstand rieselt durch die Hohlräume des textilen Gewebes, in denen sich auch Milben aufhalten und wird dort von Ihnen aufgenommen.

3. Pulverförmiges Reinigungsmittel (akarizider Teppichreiniger)

Bei dieser Ausführungsform soll eine starke Durchfeuchtung von vornherein vermieden werden. Dadurch wird eine möglichst baldige Wiederbenutzung sowie die Schonung empfindlicher Gewebe erzielt. Die akarizide Wirkung beruht in diesem Falle nur auf der oralen Einnahme durch die Milben. Deswegen ist hier die mittlere Teilchengröße des pulverförmigen Rückstands nach dem Antrocknen bzw. Aufbringen (der adsorptiv gebundenen Flüssigkeitsmenge) besonders wichtig, so daß der Großteil des Pulvers von den Milben oral aufgenommen werden kann.

Besonders bewährt haben sich erfindungsgemäße Mittel (zur Abtötung von Hausstaubmilben) der folgenden Zusammensetzung:

I) <u>Akarizider Teppichreiniger (pulverförmig)</u>

| | Gew.-% | | Gew.-% |
|---|---|---|---|
| Cellulose-Pulver | 20 bis 80 | vorzugsweise | 30 bis 70 |
| Wasser | 5 bis 60 | " | 10 bis 30 |
| Testbenzin | 1 bis 30 | " | 5 bis 20 |
| Akarizider Wirkstoff | 1 bis 20 | " | 2 bis 6 |
| Tensid | 0,05 bis 5 | " | 0,05 bis 1 |
| Parfüm | 0,2 | | |
| Konservierungsmittel | 0,2 | | |

II) <u>Akarizider Teppichreiniger (flüssig)</u>

| | Gew.-% | | Gew.-% |
|---|---|---|---|
| Wasser | 10 bis 90 | vorzugsweise | 40 bis 70 |
| Seife (Entschäumer) | 0,5 bis 5 | " | 0,5 bis 1 |
| Tensid | 1 bis 10 | " | 2 bis 5 |
| Akarizider Wirkstoff | 1 bis 20 | " | 2 bis 6 |
| Polymer 40 %-ig | 5 bis 90 | " | 20 bis 60 |
| Parfüm | 0,2 | | |
| Konservierungsmittel | 0,2 | | |

III) <u>Akarizider Polster- und Matratzen-Reiniger (schaumförmig)</u>

| | Gew.-% | | Gew.-% |
|---|---|---|---|
| Wasser | 60 bis 90 | vorzugsweise | 70 bis 90 |
| Tensid | 0,5 bis 10 | " | 2 bis 4 |
| Akarizider Wirkstoff | 0,5 bis 10 | " | 1 bis 6 |
| Cellulose | 0,5 bis 20 | " | 1 bis 5 |
| Verdickungsmittel | 0,1 bis 2 | " | 0,2 bis 0,3 |

7

| Treibmittel | 5 bis 20 | vorzugsweise 7 bis 13 |
| Parfüm | 0,2 | |
| Konservierungsmittel | 0,2 | |

IV) <u>Akarizider Polster- und Matratzen-Reiniger (schaumförmig)</u>

|  | Gew.-% | Gew.-% |
|---|---|---|
| Wasser | 10 bis 90 | vorzugsweise 70 bis 90 |
| Tensid | 0,5 bis 10 | " 2 bis 4 |
| Akarizider Wirkstoff | 0,5 bis 10 | " 1 bis 6 |
| Polymer 40 %-ig | 1 bis 80 | " 5 bis 10 |
| Treibmittel | 5 bis 20 | " 7 bis 13 |
| Parfüm | 0,2 | |
| Konservierungsmittel | 0,2 | |

Die mit dem erfindungsgemäßen Mittel zu behandelnden textilen Innenausstattungsflächen sind diejenigen Bereiche, auf denen das Vorkommen von Hausstaubmilben festgestellt wurde. Dies sind insbesondere Teppiche, Polstermöbel, Betten, einschließlich Kopfkissen, Decken sowie Bettenmatratzen. Dabei können die Fasern der Textilunterlage sowohl natürlichen als auch synthetischen Ursprungs sein.

Die Anwendung des erfindungsgemäßen Mittels auf Matratzen oder Polstermöbel erfolgt zweckmäßig in der Weise, daß nach dem Auftrocknen des schaumförmigen Reinigers die Partikel etwa 1 bis 2 cm in die Tiefe eindringen.

Wegen des erwünschten längeren Einwirkungszeitraums der akariziden Wirkkomponente auf die von Milben befallenen Flächen bzw. Gegenstände, der sich, wie weiter oben ausgeführt, über einen Zeitraum von etwa 2 bis 3 Wochen erstreckt, ist es zweckmäßig, die Behandlung mit dem erfindungsgemäßen Mittel ein- bis zweimal innerhalb dieses Zeitraums zu wiederholen. Auf diese Weise werden die jeweiligen Milbenpopulationen in effizienter Weise erfaßt.

Die folgenden Beispiele erläutern die Erfindung, ohne ihre Anwendung zu beschränken.

B e i s p i e l   1

Akarizider Teppichreiniger (flüssig)

| | |
|---|---|
| Wasser, dest. | 66,48 % |
| Entschäumer ($C_{12}$-$C_{18}$-Fettsäure und Natronlauge, 45 %-ig) | 0,7 |
| Triethanolamin | 2,00 |
| Tensidgemisch (Natriumlaurylethersulfat, Alkylphenolethoxylate) | 4,62 |
| Benzylbenzoat | 6,00 |
| Polyacrylat, 40 %-ig | 20,00 |
| Konservierungsmittel | 0,20 |
| | 100,00 % |

B e i s p i e l   2

Akarizider Polster- und Matratzenreiniger (schaumförmig)

| | |
|---|---|
| Wasser, dest. | 85,3 % |
| Tensidgemisch (Natriumlaurylsulfat, Alkensulfonat, Hydroxyalkansulfonat, Seife) | 3,4 |
| Benzylbenzoat | 2,00 |
| Cellulose | 2,00 |
| organisches Polymer (Xanthangummi) | 0,30 |
| Propan/Butan | 7,0 |
| | 100,00 % |

9

B e i s p i e l   3

Akarizider Polster- und Matratzenreiniger (schaumförmig)

| | |
|---|---|
| Wasser, dest. | 73,6 % |
| Tensidgemisch (wie Beispiel 2) | 2,8 |
| Benzylbenzoat | 2,6 |
| Polyacrylat, 40 %-ig | 8,0 |
| Propan/Butan | 13,0 |
| | 100,00 % |

B e i s p i e l   4

Akarizider Textilreiniger (pulverförmig)

| | |
|---|---|
| Cellulosepulver | 30,0  % |
| Kristallquarzsand | 30,0 |
| Natriumchlorid | 2,0 |
| Testbenzin | 12,0 |
| Wasser, dest. | 15,8 |
| Konservierungsmittel | 0,20 |
| $SiO_2$ (Diatomeenerde) | 5,00 |
| Benzylbenzoat | 5,00 |
| | 100,00 % |

Die vorstehenden erfindungsgemäßen Mittel wurden hinsichtlich ihrer Wirksamkeit gegen Hausstaubmilben untersucht. Die im Labor durchgeführten Versuche ergaben folgendes Resultat:

1. Reiniger gemäß Beispiel 1

Bei einer Anwendungskonzentration von 3 bis 5 Gewichtsprozent Benzylbenzoat in Wasser ergab sich eine Abtötungsrate der Hausstaubmilben nach 8 Tagen von 77,8 % (Versuch 1) bzw. 99,9 % (Versuch 2).

2. Mittel gemäß Beispiel 2

Die Anwendung dieses Schaumes in einer Menge von 50 bis 100 g/m² Textilfläche ergab eine Abtötungsrate der Hausstaubmilben nach einem Tag von 100 % (Versuch 1) und 100 % (Versuch 2).

3. Mittel gemäß Beispiel 3

Die Anwendung dieses Schaumes in einer Menge von 50 bis 100 g/m² Textilfläche ergab eine Abtötungsrate der Hausstaubmilben nach einem Tag von 100 %.

4. Mittel gemäß Beispiel 4

Bei der Anwendung als Pulver in einer Menge von 30 bis 50 g/m² Textilfläche betrug die Abtötungsrate der Hausstaubmilben nach einem Tag und nach 8 Tagen jeweils 99,9 %.

Bei den vorstehend angegebenen Abtötungsraten beziehen sich die Prozentangaben jeweils auf die vorhandene Milbenpopulation.

Diese Versuche wurden im biologischen Laboratorium unter Praxisbedingungen durchgeführt und mehrfach wiederholt. Dabei wurden jeweils die wiedergegebenen Wirksamkeiten bestätigt.

**Patentansprüche**

1. Mittel zur Abtötung von Hausstaubmilben, dadurch gekennzeichnet, daß es aus einer Kombination von
   - Benzylbenzoat oder Phthalsäuredibutylester als akarizidem Wirkstoff, und
   - einem flüssigen, schaumförmigen oder pulverförmigen Reinigungsmittel für textile Innenausstattungsflächen

   mit Wasser als überwiegender Trägerflüssigkeit besteht, wobei dieses Mittel auf der Basis wäßriger Kunststoffdispersionen oder -lösungen oder wasserfeuchter anorganischer oder organischer Feststoffpulver aufgebaut ist,
   die eine solche Teilchengröße aufweisen, oder diese nach dem Antrocknen bzw. Aufbringen ausbilden, daß der resultierende pulverförmige Rückstand für eine orale Aufnahme durch die Hausstaubmilben geeignet ist,
   ausgenommen ein organische, Feststoffpulver enthaltendes Mittel, dessen Feststoffgehalt unter 0,5 Gewichtsprozent liegt.

2. Mittel nach Anspruch 1, dadurch gekennzeichnet, daß der pulverförmige Rückstand eine mittlere Teilchengröße von 2 bis 100 μm aufweist.

3. Mittel nach Anspruch 1, dadurch gekennzeichnet, daß es für die Erzielung des pulverförmigen Rückstands wäßrige Kunststoffdispersionen oder -lösungen enthält, die nach dem Antrocknen eine mittlere Teilchengröße von 2 bis 100 μm ergeben.

4. Mittel nach Anspruch 1, dadurch gekennzeichnet, daß es zur Erzielung des pulverförmigen Rückstands anorganische oder organische Feststoffpulver enthält.

5. Mittel nach Anspruch 3 oder 4, dadurch gekennzeichnet, daß die Dispersionen, Lösungen oder Feststoffpulver die geeignete mittlere Teilchengröße aufweisen, oder diese nach dem Antrocknen bzw. Aufbringen ausbilden.

6. Mittel nac Anspruch 1, dadurch gekennzeichnet, daß es zur Erzielung des pulverförmigen Rückstands mit geeigneter mittlerer Teilchengröße eine oder mehrere Komponenten gemäß den Ansprüchen 3 und 4 enthält.

7. Verwendung des Mittels gemäß einem der vorhergehenden Ansprüche zur Abtötung von Hausstaubmilben auf textilen Innenausstattungsflächen.

**Claims**

1. Agent for killing house dust mites, characterised in that it consists of a combination of
   - benzyl benzoate or dibutylphthalate as an acaricidal active substance and
   - a liquid, foam or powdered cleaning agent for textile interior furnishings

   with water as the chief carrier liquid, this agent being synthesised on the basis of aqueous plastics dispersions or solutions or water-moistened inorganic or organic solid powders, which have a particle size, or achieve such a particle size after drying or application, such that the resulting powdered residue is suitable for oral absorption by the house dust mites, with the exception of an agent containing organic solid powders having a solids content of less than 0.5% by weight.

2. Agent according to claim 1, characterised in that the powdered residue has an average particle size of from 2 to 100 μm.

3. Agent according to claim 1, characterised in that it contains, for the production of the powdered

11

residue, aqueous plastics dispersions or solutions which, after drying, yield an average particle size of from 2 to 100 μm.

4. Agent according to claim 1, characterised in that, for the production of the powdered residue, it contains organic or inorganic solid powders.

5. Agent according to claim 3 or 4, characterised in that the dispersions, solutions or solid powders have the suitable average particle size or achieve it after drying or application.

6. Agent according to claim 1, characterised in that, for the production of the powdered residue with a suitable average particle size, it contains one or more components according to claims 3 and 4.

7. Use of the agent according to one of the preceding claims for killing house dust mites on textile interior furnishings.

**Revendications**

1. Moyen destiné à la destruction d'acariens de poussières domestiques, caractérisé en ce qu'il consiste en une combinaison de :
   - benzoate de benzyle ou ester butylique de l'acide phtalique en tant que substance active acaricide, et
   - un produit de nettoyage liquide, moussant ou pulvérulent pour les surfaces de décoration ou d'aménagement d'intérieurs en textile, avec de l'eau en tant que support liquide prédominant, ce moyen étant constitué à partir de dispersions ou de solutions de matières synthétiques aqueuses ou de poudres de matières solides inorganiques ou organiques humectées à l'eau et qui présentent une granulométrie telle ou forment après le séchage ou le dépôt, une granulométrie telle que le résidu pulvérulent résultant convient à l'administration orale par les acariens de poussières domestiques,
   
   exception faite d'un moyen contenant une poudre de matières solides organiques dont la teneur en matières solides se situe au-dessous de 0,5 % en poids.

2. Moyen selon la revendication 1, caractérisé en ce que le résidu pulvérulent présente une granulométrie moyenne de 2 jusqu'à 100 μm.

3. Moyen selon la revendication 1, caractérisé en qu'il contient pour l'obtention du résidu pulvérulent des dispersions ou solutions de matières synthétiques aqueuses, qui donnent une granulométrie moyenne de 2 à 100 μm après le séchage.

4. Moyen selon la revendication 1, caractérisé en ce qu'il contient pour l'obtention du résidu pulvérulent une poudre de matières solides inorganiques ou organiques.

5. Moyen selon la revendication 3 ou 4, caractérisé en ce que les dispersions, solutions ou poudres de matières solides présentent les granulométries moyennes appropriées ou forment ces granulométries après leur séchage ou dépôt.

6. Moyen selon la revendication 1, caractérisé en ce que pour l'obtention du résidu pulvérulent avec une granulométrie moyenne appropriée, il contient un ou plusieurs composants selon les revendications 3 et 4.

7. Utilisation du moyen selon l'une des revendications précédentes pour la destruction des acariens de poussières domestiques sur les surfaces de décoration ou d'aménagement d'intérieurs en textile.